(19) Europäisches Patentamt
European Patent Office
Office européen des brevets

(11) **EP 2 101 186 B1**

(12) **EUROPEAN PATENT SPECIFICATION**

(45) Date of publication and mention
of the grant of the patent:
**26.10.2011   Bulletin 2011/43**

(51) Int Cl.:
***G01S 1/00*** (2006.01)

(21) Application number: **09003127.9**

(22) Date of filing: **04.03.2009**

(54) **Method and system for generating temporary ephemeris**

Verfahren und Vorrichtung zur Erzeugung temporären Ephemeris

Méthode et dispositif pour la génération d'ephemeris temporaire

(84) Designated Contracting States:
**DE GB**

(30) Priority: **14.03.2008   US 48382**

(43) Date of publication of application:
**16.09.2009   Bulletin 2009/38**

(73) Proprietor: **Broadcom Corporation**
**Irvine, CA 92617 (US)**

(72) Inventors:
• **van Diggelen, Frank**
**95120 San Jose, CA (US)**

• **Abraham, Charles**
**95037 Los Gatos, CA (US)**

(74) Representative: **Jehle, Volker Armin**
**Bosch Jehle Patentanwaltsgesellschaft mbH**
**Flüggenstrasse 13**
**80639 München (DE)**

(56) References cited:
**EP-A- 1 876 467**      **WO-A-2007/092523**
**US-A1- 2002 188 403**    **US-A1- 2007 247 354**

**EP 2 101 186 B1**

**Description**

FIELD OF THE INVENTION

Certain embodiments of the invention relate to signal processing for satellite navigation systems. More specifically, certain embodiments of the invention relate to a method and system for generating temporary ephemeris.

BACKGROUND OF THE INVENTION

Global Navigation satellite systems (GNSS) receivers may normally determine their position by receiving satellite broadcast signals from a plurality of satellites. These satellites, for example 24 at any time for the Global Positioning System (GPS), may broadcast radio frequency signals that comprise information that may be exploited by the satellite receiver to determine its own position. By measuring the time the broadcast signals may travel from the satellites to the satellite receiver, and the known position of the transmitting satellite, the satellite receiver may be able to determine its own position by trilateration. In general, at least 3 satellite signals may need to be decoded at the satellite receiver in order to determine its position.

Further limitations and disadvantages of conventional and traditional approaches will become apparent to one of skill in the art, through comparison of such systems with some aspects of the present invention as set forth in the remainder of the present application with reference to the drawings.

WO 2007/092523 describes a method and apparatus for determining long term orbit models using variable time-horizons to improve the orbit and clock model accuracy. The method and apparatus use either historic ephemeris or historic measurements for at least one satellite to produce an orbit parameter prediction model. The parameter predicted by the model is compared to an orbit parameter of a current broadcast ephemeris. The result of the comparison (an indicia of accuracy for the model) is used to establish a time-horizon for the orbit parameter prediction model for that particular satellite. Such a time-horizon may be established in this manner for each satellite within a satellite constellation.

According to the invention, there are described a method for processing satellite signals as defined by independent claim 1, and a system for processing satellite signals as defined by independent claim 5.

Further advantageous features of the invention are defined by the dependent subclaims.

A method and/or system for generating temporary ephemeris, substantially as shown in and/or described in connection with at least one of the figures, as set forth more completely in the claims.

Advantageously, the method further comprises generating said translated satellite position at a position determined by said receiver clock corrected pseudorange and/or said associated rate of change of said receiver clock corrected pseudorange.

Advantageously, the method further comprises generating said rate of change of said associated receiver clock corrected pseudorange based on one or more Doppler frequency measurement of said plurality of satellite signals and/or said second plurality of satellite signals.

Advantageously, the method further comprises generating said rate of change of said associated receiver clock corrected pseudorange based on a plurality of pseudorange measurements.

Advantageously, the method further comprises determining said receiver clock corrected pseudorange from at least a receiver clock offset and a pseudorange measurement.

Advantageously, the method further comprises when said satellite receiver receives complete ephemeris data from said one or more satellites from which said incomplete ephemeris data was received by said satellite receiver, utilizing this complete ephemeris data and said determined one or more positions to determine a location of said satellite receiver.

Advantageously, the method further comprises updating said estimated position of said satellite receiver based on newly generated temporary ephemeris until said satellite receiver receives complete ephemeris data from said one or more satellites for which said incomplete ephemeris data was received by said satellite receiver.

Advantageously, the method further comprises updating said generated temporary ephemeris data based on a rate of change of an associated receiver clock corrected pseudorange and a translated satellite position.

Advantageously, said plurality of satellites, a second plurality of satellites from which said second plurality of satellite signals are received, and said satellite receiver conform to the Global Positioning System (GPS) standard, the GALILEO standard, the GLOSNASS standard, the IRNSS standard, or the BEIDOU standard.

Advantageously, said one or more circuits generate said translated satellite position at a position determined by said receiver clock corrected pseudorange and/or said associated rate of change of said receiver clock corrected pseudorange.

Advantageously, said one or more circuits generate said rate of change of said associated receiver clock corrected pseudorange based on one or more Doppler frequency measurement of said plurality of satellite signals and/or said second plurality of satellite signals.

Advantageously, said one or more circuits generate said rate of change of said associated receiver clock corrected pseudorange based on a plurality of pseudorange measurements.

Advantageously, said one or more circuits determine said receiver clock corrected pseudorange from at least a receiver clock offset and a pseudorange measurement.

Advantageously, said one or more circuits, when said satellite receiver receives complete ephemeris data from said one or more satellites from which said incomplete ephemeris data was received by said satellite receiver, utilize this complete ephemeris data and said determined one or more positions to determine a location of said satellite receiver.

Advantageously, said one or more circuits update said estimated position of said satellite receiver based on newly generated temporary ephemeris until said satellite receiver receives complete ephemeris data from said one or more satellites for which said incomplete ephemeris data was received by said satellite receiver.

Advantageously, said one or more circuits update said generated temporary ephemeris data based on a rate of change of an associated receiver clock corrected pseudorange and a translated satellite position.

Advantageously, said plurality of satellites, a second plurality of satellites from which said second plurality of satellite signals are received, and said satellite receiver conform to the Global Positioning System (GPS) standard, the GALILEO standard, the GLONASS standard, the IRNSS standard, or the BEIDOU standard.

These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1 is a diagram illustrating an exemplary satellite navigation system, in accordance with an embodiment of the invention.

FIG. 2 is a diagram illustrating an exemplary satellite navigation system in a two-dimensional setting, in accordance with an embodiment of the invention.

FIG. 3 is a diagram illustrating an exemplary satellite navigation system in a two-dimensional setting with a timing offset, in accordance with an embodiment of the invention.

FIG. 3B is a diagram illustrating an exemplary satellite positioning, in accordance with an embodiment of the invention.

FIG. 4 is a diagram illustrating an exemplary construction of temporary ephemeris based on a satellite's almanac position.

FIG. 5 is a diagram illustrating a prediction error, in accordance with an embodiment of the invention.

FIG. 6 is a diagram illustrating temporary ephemeris without the use of an almanac position, in accordance with an embodiment of the invention.

FIG. 7 is a flowchart illustrating an exemplary algorithm to compute a satellite receiver position in accordance with an embodiment of the invention.

DETAILED DESCRIPTION OF THE INVENTION

Certain embodiments of the invention may be found in a method and system for generating temporary ephemeris. Aspects of a method and system for generating temporary ephemeris may comprise determining one or more positions of a satellite receiver based on a plurality of satellite signals received from a plurality of satellites for which complete ephemeris data has been received at the satellite receiver. Temporary ephemeris data may be generated from the determined one or more positions of the satellite receiver and one or more satellite signals from one or more satellites with incomplete ephemeris data. One or more estimated positions of the satellite receiver may be determined based on the generated temporary ephemeris and a second plurality of satellite signals, wherein at least one of the second plurality of satellite signals is associated with the one or more satellites with incomplete ephemeris data.

The temporary ephemeris data may be generated by generating a translated satellite position and a rate of change of an associated receiver clock corrected pseudorange. The translated satellite position may be generated based on an almanac satellite position, or at a position determined by said receiver clock corrected pseudorange and/or said associated rate of change of said receiver clock corrected pseudorange. The rate of change of said associated receiver clock corrected pseudorange may be generated based on one or more Doppler frequency measurement of said plurality of satellite signals and/or said second plurality of satellite signals, or based on a plurality of pseudorange measurements. The receiver clock corrected pseudorange may be determined from at least a receiver clock offset and a pseudorange measurement. When the satellite receiver may receive complete ephemeris data from the one or more satellites from which the incomplete ephemeris data was received by the satellite receiver, utilizing this complete ephemeris data and the determined one or more positions to determine a location of the satellite receiver.

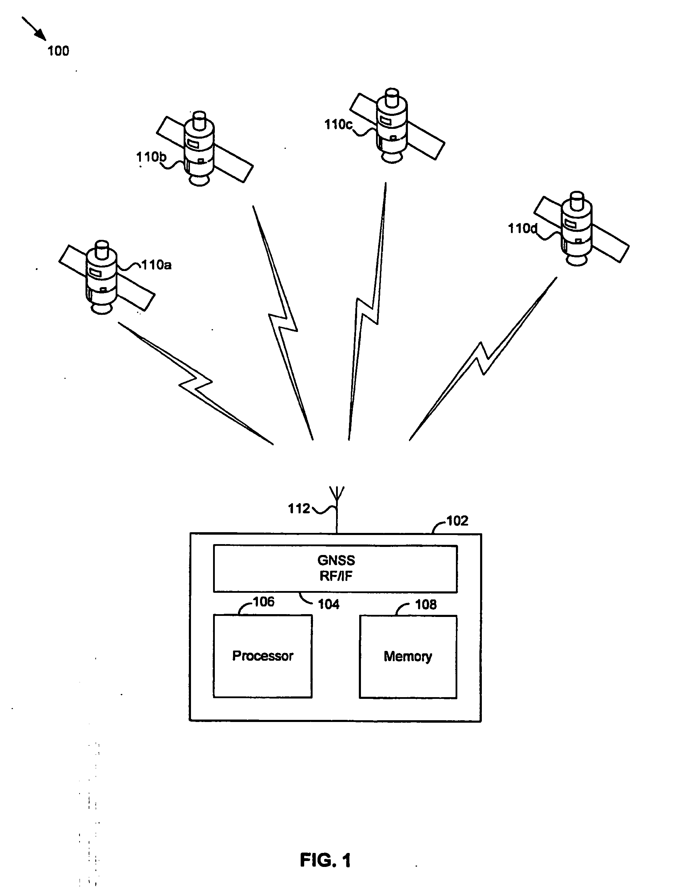

FIG. 1 is a diagram illustrating an exemplary satellite navigation system, in accordance with an embodiment of the invention. Referring to FIG. 1, there is shown a satellite navigation system 100, comprising a satellite receiver 102 and a plurality of satellites, of which satellites 110a, 110b, 110c, 110d may be illustrated. The satellite receiver 102 may be communicatively coupled to a receiver antenna 112. The satellite receiver 102 may comprise a Global Navigation Satellite System (GNSS) radio-frequency (RF) and intermediate-frequency (IF) front-end 104, a processor 106 and memory 108.

The satellites 110a through 110d may comprise suitable logic, circuitry and/or code that may be enabled to generate and broadcast suitable radio-frequency signals that may be received by a satellite receiver, for example satellite receiver 102, to determine the satellite receiver 102 position. The satellite receiver 102 may comprise suitable logic, circuitry and/or code that may be enabled to receive signals broadcasted from satellites, for example satellites 110a through 110d, and process the received signals to determine the position of the satellite receiver 102. The GNSS RF/IF front-end 104 may comprise suitable logic, circuitry and/or code that may be enabled to receive satellite broadcast signals via receiver antenna 112 and process them in a desirable fashion to generate baseband signals, which may be suitable for further processing in the satellite receiver 102 and the processor 106. The memory 108 may comprise suitable logic, circuitry and/or code that may enable storage and access to data and code suitable for the operations performed by the satellite receiver 102 and the processor 106.

In FIG. 1, an exemplary satellite navigation scenario may be illustrated, wherein a satellite receiver 102 may receive a plurality of satellite signal from which the satellite receiver 102 may be able to extract information that may enable the satellite receiver to determine its position. The satellite receiver 102 and the satellites, for example satellites 110a through 110d, may be operating in compliance with the Global Positioning System (GPS) developed and operated by the United States of America Department of Defense. In accordance with various embodiments of the invention, the invention may not be limited to application in GPS and may be applied to other GNSS systems, for example GALILEO, GLONASS, IRNSS, and BEIDOU.

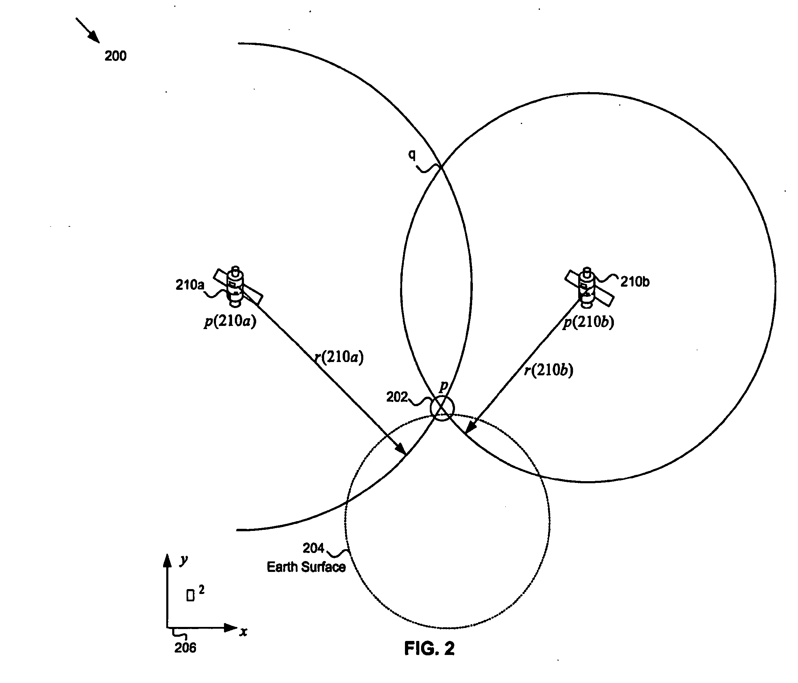

FIG. 2 is a diagram illustrating an exemplary satellite navigation system in a two-dimensional setting, in accordance with an embodiment of the invention. Referring to FIG. 2, there is shown a satellite navigation system 200, comprising a receiver 202 (illustrated by a small circle) at position $p$ , satellites 210a and 210b, an earth surface 203 illustrated by a dotted circle, and an exemplary coordinate system 206. The exemplary coordinate system 206 may be a two-dimensional coordinate system in $\square^2$, spanned by the unit vectors $x$ and $y$, and where $\square$ may denote the set of real numbers and $\square$ "denotes a n-dimensional space with real coordinates. There is also shown a position of satellite 210a in $\square^2$ denoted $p(210a)$, a position of satellite 210b denoted $p(210b)$, an intersection point $q$ , a range from satellite 210a to the satellite receiver 202 $r(210a)$ and a range from satellite 210b to the satellite receiver 202 $r(210b)$.

To illustrate the principles involved in determining a position of the receiver 202 from the satellites, for example the satellites 210a and 210b, it may be useful to consider a two-dimensional scenario as illustrated in FIG. 2. The three-dimensional case encountered in reality may be considered an extension to three dimensions of the principles demonstrated in the two-dimensional case. As illustrated in FIG. 2, the principle of determining the position $p$ of the satellite receiver 202 may be to measure the range from the satellite receiver 202 to a plurality of satellites, for example $r(210a)$ and $r(210b)$, based on the known positions of the satellites, for example $p(210a)$ and $p(210b)$. Based on the measured ranges from the satellites 210a and 210b to the satellite receiver 202 and the known position of the satellites, each satellite may define a circle (in $\square^2$) of positions that lie at a given range from the satellite, as illustrated in FIG. 2. In the case of two satellites, there may be two intersection points: one may be the desired position $p$ and the other may be the intersection $q$. As may be observed from FIG. 2, only $p$ may be close to the surface of the earth. Hence, only $p$ may be a feasible solution for the position of the satellite receiver 202. Therefore, in the depicted two-dimensional scenario of FIG. 2, two satellites may suffice in principle to determine the position $p$. The position $p$ may be given by one solution to the following relationships in the two-dimensional case:

$$r(k) = \| p(k) - p \|, \ \ k = 210a, 210b$$

In three dimensions, the circles around the satellites may become spheres and the intersection of two spheres may generate a circle of feasible solutions. By intersecting the circle with a further sphere, two possible positions will be found. Again, only one of the two solutions will be close to the surface of the earth. Therefore, in the three dimensional case, the solution may require 1 more satellite to resolve the extra dimension and the position may be resolved from the following relationship, where each $k$ may denote a different satellite:

$$r(k) = \| p(k) - p \|, \ \ k = 1, 2, 3$$

Each satellite, for example satellites 210a and 210b, may broadcast a signal that may comprise information to determine the satellite's position. Once placed in orbit, a satellite's position may be predictable. This predicted position of the satellites may generally be available in an almanac at the satellite receiver and may be stored, for example, in the memory 108. Due to certain imperfections in computing the satellite's position, a GPS ground station may monitor the satellite's exact position. In order to correct for any deviations from the almanac position, the ground station may supply the satellite with data that may allow the satellite's position to be determined to a high degree of accuracy when received by a satellite receiver. This data may be valid for a limited time only and may be referred to as ephemeris data. Its ephemeris data may be broadcast by each satellite, and may be received by the satellite receiver. The satellite position $p(k,t)$ of satellite $k$, may be computed using the ephemeris data. The almanac position $P(k,t)$ of a given satellite $k$ may hence be related to the position $p(k,t)$ together with a correction term $\Delta(k,t)$ from the following relationship:

$$p(k,t) = P(k,t) + \Delta(k,t)$$

where the variable $t$ may denote time and indicate that the position of the satellite may change as a function of time. In accordance with various embodiments of the invention, if the correction term $\Delta(k,t)$ may be available at a satellite receiver, for example satellite receiver 202, the exact position of the satellite $k$ may be determined to a high degree of accuracy. The range $r(k)$ from a satellite $k$ to the satellite receiver 202 may be calculated by measuring the time it may take a signal to travel from the satellite to the satellite receiver 202. The signal may be transmitted by a satellite at a pre-determined time. Each satellite may broadcast its signal comprising various information by using a spreading code unique to each satellite. The spreading codes may be known by the satellite receiver and used to correlate the received signal with a local replica of the spreading code to establish the time it took the broadcast signal to arrive at the satellite receiver 202. Since the satellite receiver 202 clock may initially not be synchronized to the satellites clock, the measurement will only be accurate up to an additive constant $b$. The additive constant $b$ may be the same for all satellites.

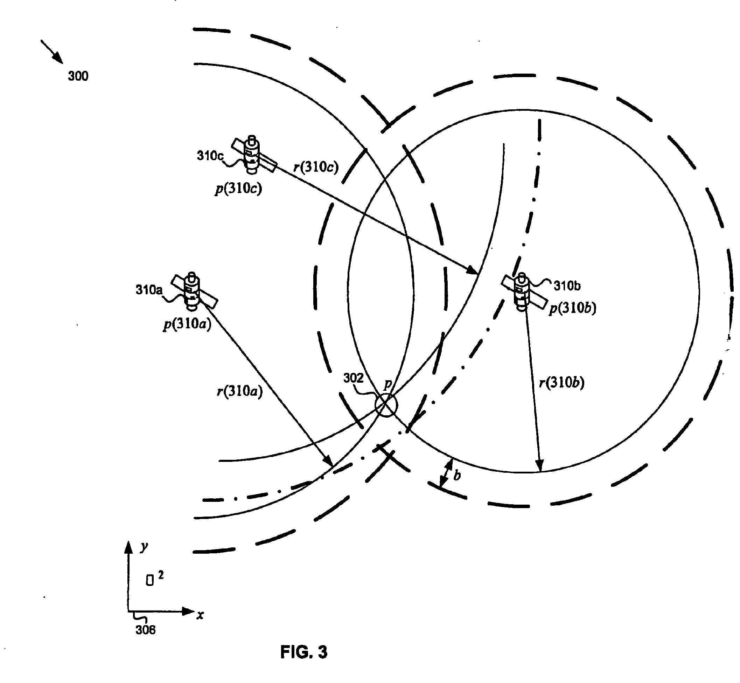

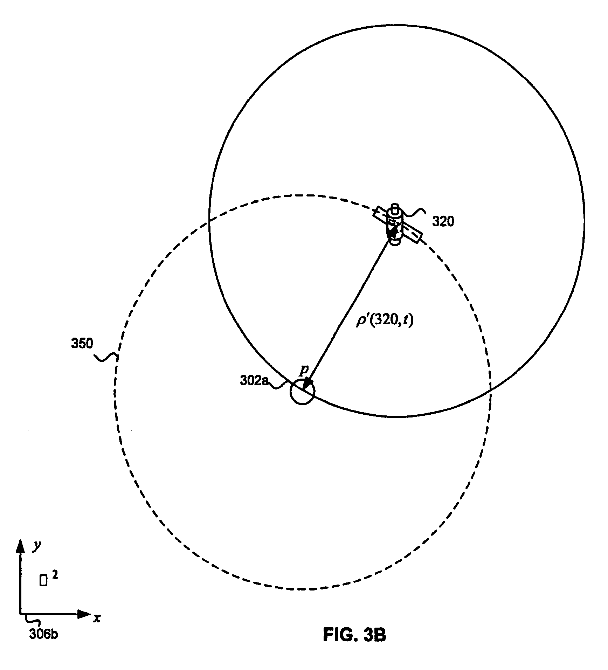

FIG. 3 is a diagram illustrating an exemplary satellite navigation system in a two-dimensional setting with a common offset, in accordance with an embodiment of the invention. Referring to FIG. 3, there is shown a satellite navigation system 300, comprising a receiver 302 (illustrated by a small circle) at position $p$, satellites 310a, 310b, and 310c, and an exemplary coordinate system 306. The exemplary coordinate system 306 may be a two-dimensional coordinate system in $\square^2$, spanned by the unit vectors $x$ and $y$, and where $\square$ may denote the set of real numbers and $\square$ "denotes a n-dimensional space with real coordinates. There is also shown a position of satellite 310a in $\square^2$ denoted $p(310a)$, a position of satellite 310b denoted $p(310b)$, a position of satellite 310c denoted $p(310c)$, a range from satellite 310a to the satellite receiver 302 $r(310a)$, a range from satellite 310b to the satellite receiver 302 $r(310b)$, and a range from satellite 310c to the satellite receiver 302 $r(310b)$. The 3 ranges may be illustrated with a solid circle. There is also shown a bold dashed-line circle corresponding to each $r(310a)+b$ and $r(310b)+b$, and a bold dot-dashed-line circle corresponding to $r(310c)+b$.

As for FIG. 2, it may be useful to consider a two-dimensional scenario. The three-dimensional case encountered in reality may be considered a simple extension to three dimensions of the principles demonstrated in the two-dimensional case.

As illustrated in FIG. 2, the 2 satellites may suffice to determine the position b when the clocks may be synchronized. In cases where the clocks between the satellites and the satellite receiver 302 may not be synchronized, an additional variable $b$ may need to be solved for, requiring an additional satellite. From the bold dashed lines of the offset range circles corresponding to the satellites 310a and 310b, one may observe that the intersection of the two circles may generate 2 intersection points, similar to FIG. 2. However, the third satellite, satellite 310c illustrated by the dot-dashed line may not intersect at one of the intersection points of the range plus offset circles generated from the satellites 310a and 310b. However, if the offset $b$ may be removed, as shown by the solid circles associated with the satellites 310a, 310b and 310c, all three circles may intersect at position $p$. Hence, using an extra satellite, the common offset $b$ may be determined by ensuring that at least 3 satellites may intersect at a common point.

This same observation may be carried over into three dimensions and using 4 satellites, it may thus be possible to resolve the offset $b$. Accordingly, the position and the offset $b$ in 3 dimensions may be resolved from 4 satellites by using the following relationships:

$$r(k) + b = \| p(k) - p \| + b, \quad k = 1, 2, 3, 4$$

In a GPS system, the spreading codes that may be used to determine the range through correlation with a local replica of the correlation code, may be referred to as C/A codes. The C/A codes may be unique to each satellite, and may hence identify a received signal. A C/A code may comprise 1023 chips and may take 1 ms to send. For each bit, 20 repetitions of the C/A code may be transmitted by the satellite, for example satellite 310a, over the duration of 20 ms. In addition, 30 bits may make one word, 10 words may make a subframe (6 s), 5 subframes may make one page, and 25 pages may make a superframe (12.5 min). In most instances, it may take at least the first three subframes of a transmission to generate a position. In those instances, at least the first 18 seconds of data may need to be received.

As mentioned above, the range $r(k)$ may be determined from measuring the time it may take for the transmission to travel from the satellite, for example satellite 310a, to the satellite receiver 302. Ideally, the clocks of the satellite 310a and the satellite receiver 302 may be synchronized and the travel time $r(k)$ may be determined by correlation as described above. In that case, the range may be given by $r(k) = c\tau(k)$, where $c$ may be the speed of light. In practice, however, the satellite time and the receiver time may not be synchronized. Although the satellites may comprise an atomic clock, there may be some drift and/or offset that may need to be compensated. If GPS time (or absolute time) may be time $t$, this may describe the satellite time $t_s(k,t)$ of satellite $k$ by the following relationship:

$$t_s(k,t) = t + \delta_s(k,t)$$

The offset $\delta_s(k,t)$ may be estimated by a GPS ground control station and the coefficients of its Taylor expansion may be transmitted as part of the satellite data. Similarly, the receiver clock (user time) $t_u$ may be described by the following relationship:

$$t_u(t) = t + \delta_u(t)$$

In accordance with various embodiments of the invention, $\delta_s(k,t)$ and $\delta_u(t)$ may comprise one or more delay terms, for example atmospheric delays, RF delays, and/or processing delays. A new frame may be sent at a pre-determined time $t_s(k,t)$ and may be detected at the satellite receiver, for example satellite receiver 302, at time $\hat{t}(k) = t + r(k)$. The pseudorange to a particular satellite may be defined by the following relationship:

$$\rho(k,\hat{t}) = c[t_u(\hat{t}) - t_s(k, \hat{t} - \tau(k))]$$

which may essentially be the distance computed from the receiver time minus the satellite time. Since the receiver knows $t_u(\hat{t})$ and it may know $t_s(k,t) = t_s(k, \hat{t} - \tau)$, the satellite receiver 302 may compute the pseudorange. Substituting the definitions of the satellite time $t_s(k,t)$ and the satellite receiver time $t_u(t)$ from the above equations, the following relationships may be obtained.

$$\rho(k,\hat{t}) = c[\hat{t} + \delta_u(\hat{t}) - \hat{t} + \tau(k) - \delta_s(k, \hat{t} - \tau)]$$

$$\rho(k,\hat{t}) = c\tau(k) + c[\delta_u(\hat{t}) - \delta_s(k,t)]$$

Since the satellite receiver 302 may receive $\delta_s(k,t)$ from the satellite, for example satellite receiver 310a, the clock offset term $\delta_s(k,t)$ may be corrected. The corrected pseudorange may then be given by the following relationship:

$$\rho_c(k,\hat{t}) = c\tau(k) + c\delta_u(\hat{t})$$

By denoting the offset $b = c\delta_u(\hat{t})$ and recalling that the range may be defined as $r(k) = \| p(k) - p \| = c\tau(k)$, a set of equations may be given by the following relationship:

$$\rho_c(k,\hat{i}(k)) - b = r(k) = \| p(k) - p \| \quad k = 1,2,3,4$$

These equations may be four equations in 4 unknowns (3 coordinates of $p$ and the offset $b$). The satellite may broadcast positional correction data in what may be referred to as ephemeris. Ephemeris may comprise the position correction factor $\Delta(k,t)$ and the satellite timing offset $\delta_s(k,t)$.

In some instances, it may take long to obtain the ephemeris data from a particular satellite. For example, in hilly terrain, a satellite may only intermittently be in view of a moving vehicle, for example. In these scenarios, where uninterrupted reception of a satellite's broadcast may not be possible, it may take a significant amount of time to obtain a satellite's ephemeris data that may be used to compute $\delta_s(k,t)$. This may also be the case when a vehicle travels in urban areas because of tunnels and high structures, for example. In these scenarios, it may be desirable to be able to use a satellite that may intermittently be received, even if its ephemeris data may not be available. For example, there may be instances when a satellite navigation as described above may be possible, for example from 4 satellites for which ephemeris may have been received at the satellite receiver. In addition, one or more satellites may intermittently be in view and their broadcast signal may be received at times, but their ephemeris may not yet be available. In some instances, for example by turning a corner and changing a vehicle's travel direction, one or more of the previously intermittently received satellites may become visible, whereas one or more of the previously visible satellites may no longer be visible. In these cases, it may be desirable to start navigation with the newly visible satellites almost immediately, before ephemeris has been received. Since no ephemeris may be available for the intermittently received satellites, the corrected pseudorange $\rho_c(k,t)$ may not be obtained. However, since other satellites are visible with ephemeris, the offset $b$ may be known and the receiver clock corrected pseudorange $\rho'(k,t)$ may be determined by correcting for the offset $b$, given by the following relationship:

$$\rho(k,\hat{i}) = c\tau(k) + \underbrace{c\delta_u(\hat{i})}_{=b} - c\delta_s(k,t)$$

$$\rho'(k,\hat{i}) = c\tau(k) - c\delta_s(k,t)$$

Since the satellite receiver 302 position may be known from the satellites received with ephemeris, the receiver clock corrected pseudorange may be used to 'fix' a position of the satellite associated with it, as is explained for FIG. 3B below.

In accordance with various embodiments of the invention, it may be desirable to determine the receiver position by Linearization. Using the Linearization approach, a system of linear equations may be solved in accordance with the following relationship:

$$\mathbf{p} = \mathbf{Hx} \quad (1)$$

where $\mathbf{p} = [\rho(1,t) - \hat{\rho}(1,t_2),..., \rho(n,t) - \hat{\rho}(n,t_2)]^T$ may be a vector with $n$ elements for $n$ satellites, which may represent an estimated change in pseudorange between the pseudorange $\rho(k,t)$ for satellite $k$ at time $t$, and the estimated pseudorange $\hat{\rho}(k,t_2)$ of satellite $k$ at some future time $t_2 > t$. The estimated pseudorange $\hat{\rho}(k,t_2)$ may be estimated based on the common bias, for example offset b , and ephemeris data. The vector $\mathbf{x}$ may be a vector comprising an estimated change in position. For example, the vector $\mathbf{x}$ may be a receiver state vector $\mathbf{x} = [\Delta_{lat}(t,t_2),\Delta_{lon}(t,t_2),\Delta_{alt}(t,t_2)\Delta_b(t,t_2)]^T$, where $\Delta_{lat}(t,t_2)$ may be an estimated difference in the latitude of the receiver position between time $t$ and $t_2$, $\Delta_{lon}(t,t_2)$ may be an estimated difference in the longitude of the receiver position between time $t$ and $t_2$, $\Delta_{alt}(t,t_2)$ may be an estimated difference in the altitude of the receiver position between time $t$ and $t_2$, and $\Delta_b(t,t_2)$ may be an estimated difference in the common offset between time $t$ and $t_2$. In accordance with various embodiments of the invention, the receiver state vector $\mathbf{x}$ may be in any desirable coordinate system. The matrix $\mathbf{H}$ may be an appropriately dimensioned mixing matrix which may be referred to as "line-of-sight matrix", or "observation matrix." The matrix $\mathbf{H}$ may relate the change in pseudorange of vector $\mathbf{p}$ with the change in receiver state $\mathbf{x}.$

In accordance with various embodiments of the invention, with known ephemeris, $\mathbf{p},\mathbf{H}$ may be determined and a position update may be generated from solving the linear system for $\mathbf{x}.$

FIG. 3B is a diagram $\delta$ illustrating an exemplary satellite positioning, in accordance with an embodiment of the invention. Referring to FIG. 3B, there is shown a known position satellite receiver 302a at position $p$, a dashed circle range 350 centered at 302a, and a satellite 320. In the two-dimensional setting depicted in FIG. 3B, by knowing the position of the satellite receiver 302a to be $p$ , an effective satellite position may be determined by the dashed circle 350, centered at the satellite receiver 302a and with radius $\rho'(320,t)$. Because this radius may be given by $\rho'(320,\hat{t}) = c\tau(320) - c\delta_s(320,t)$, the radius may not correspond to the actual distance to the satellite 320 but to a corrected distance, corrected for the timing offset $c\delta_u(t)$. The exact assumed position of the satellite 320 on the dashed circle 350 may be arbitrary, as may be seen from the situation depicted in FIG. 3B, since any assumed satellite position on the dashed circle 350 may go through the correct position $p$ of the satellite receiver. In three dimensions, the situation may be similar and the dashed circle 350 may become a sphere around the position $p$. The fact that an effective assumed position may be used for a satellite's position (without ephemeris) may be exploited for navigational purposes by constructing temporary ephemeris for satellites where the ephemeris may not be available, for example based on the satellite's Almanac position $P(k,t)$.

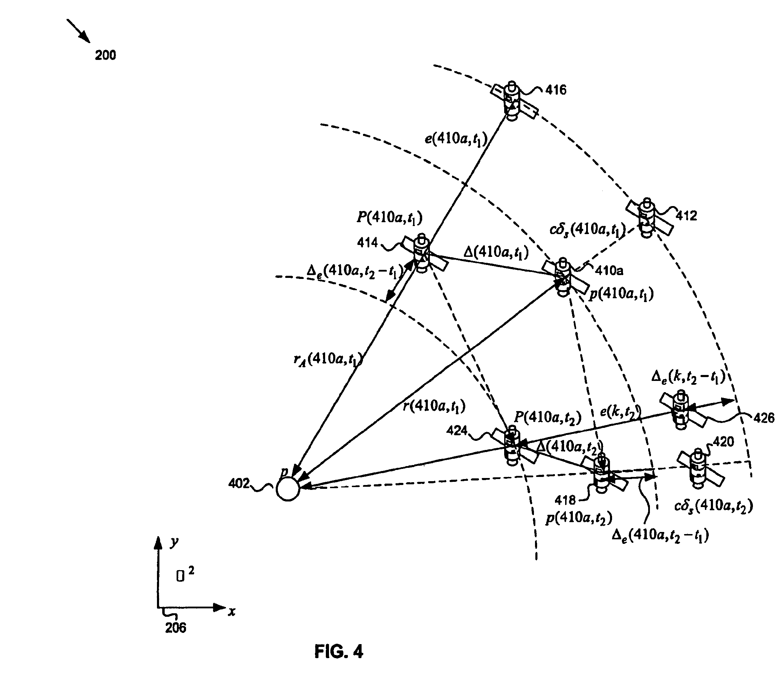

FIG. 4 is a diagram illustrating an exemplary construction of temporary ephemeris based on a satellite's almanac position. Referring to FIG. 4, there is shown a satellite 410a at position $p(410a,t_1)$. The same satellite is also shown at time $t_2$ at position $p(410a,t_2)$ and labeled satellite 418. These are the only two actual satellite positions, the other satellites depicted show various associated positions. There is shown an almanac satellite position 414 of satellite 410a at time $t_1$ and an almanac satellite position 424 of satellite 410a at time $t_2$. There is a measured satellite position 412 at time $t_1$, and a measured satellite position 420 at time $t_2$. There is shown a transposed satellite position 416 at time $t_1$, and a transposed satellite position 426 at time $t_2$. There is shown a satellite receiver 402 at a known position $p$. There is also shown a range $r(410a,t_1)$ from the satellite 410a to the satellite receiver 402, a range offset $c\delta_s(410a,t_1)$ from the actual satellite position 410a to the measured satellite position 412, an almanac range $r_A(410a,t_1)$ from the satellite receiver 402 to the almanac position 414, an almanac correction term $e(410a,t_1)$ between the almanac position 414 and the transposed satellite position 416, and a distance vector $\Delta(410a,t_1)$ between the almanac position 414 and the actual satellite position 410a. Similar quantities may be identified for time instance $t_2$.

As described above, a satellite receiver 402 position $p$ may be determined from 4 satellites (with ephemeris data, not shown in FIG. 4). The satellite 410a may be a satellite that may be visible intermittently and its ephemeris data may not be available. A receiver clock corrected pseudorange $$\rho'(410,t_1) = \underbrace{c\tau(410a) - c\delta_s(410a,t_1)}_{=r(410a,t_1)}$$ may be measured for satellite 410a as described for FIG. 3. The actual position of the satellite 410a may be at a range $r(410a, t_1)$ from the satellite receiver 402. Since the range offset $c\delta_s(410a,t_1)$ may not be corrected in the absence of ephemeris data, the measured receiver clock corrected pseudorange $\rho'(410,t_1)$ makes the satellite 410a appear to be located at the measured satellite position 412, based on the known position $p$. In the illustrated example of FIG. 4, the measured distance may be larger than the actual range $r(410a,t_1)$. Although the satellite receiver 402 may not know the position $p(410a,t_1) = P(410a,t_1) + \Delta(410a,t_1)$ of the satellite 410a because the ephemeris data to determine $\Delta(410a,t_1)$ may not be available, the satellite receiver 402 may know the approximate position of the satellite 410a based on locally stored almanac data $P(410a,t_1)$. This almanac position $P(410a,t_1)$ may be illustrated by the almanac satellite position 414.

Based on the almanac position $P(410a,t_1)$ and the receiver clock corrected pseudorange $\rho'(410a,t_1)$, a transposed satellite position 416 may be determined such that $p_T(410a,t_1)$ may be at a distance given by $\rho'(410a,t_1) = r_A(410a,t_1) + e(410a, t_1)$. In these instances, the transposed satellite position 416 may be on the same sphere/circle as the measured satellite position 412. The almanac correction term $e(410a,t_1)$ may be a range correction term similar to a position correction term $\Delta(410a,t_1)$ and may serve as a temporary ephemeris together with the almanac to determine the satellite position. As illustrated for FIG. 3B, any position at a certain range on a sphere/circle around the known satellite receiver position may be equally desirable as a measured satellite position. The transposed satellite position 416 may hence be located at the same distance as the measured satellite position 412, and may be defined by an almanac correction term $e(410a,t_1)$ that may be added to the range $r_A(410a,t_1)$ between the known satellite receiver position 402 and the known almanac satellite position 414. Hence, the transposed satellite position 416 may be assumed to be a hypothetical satellite position that may correct for the satellite clock timing offset $\delta_s(t)$. By assuming that the satellite may be placed at the transposed satellite position 416, the receiver clock corrected pseudo-range measurement $\rho'(410,t_1)$ may indicate the correct position $p$ of the satellite receiver 402.

As shown in FIG. 3B, any translated satellite position at a desirable distance from the satellite receiver 302a may be useable. In the instance depicted in FIG. **4,** any location on the circle around $p$ at distance $\rho'(410a,t_1)$ may be chosen in principle, for example the transposed satellite position 416. The advantage of linking the transposed satellite position 416 to the almanac satellite position 414 via the almanac correction term $e(410a,t_1)$ may be that the almanac position may be available for future time instances, for example almanac position 424 at time $t_2$. In instances where the time difference from the initial determination of the transposed satellite position 416 may be within certain limits, it may be assumed that the almanac correction term $e(410a,t_1)$ may stay approximately constant since the actual satellite position may vary slowly with respect to the almanac predicted satellite position, and may be offset by a relatively small error $\Delta(410a,t_1)$. At a future time instant $t_2$, it may be the case that the previously intermittently visible satellite 410a may become visible, while one of the previously used satellites with ephemeris data available, may no longer be visible. In these instances, it may be that the ephemeris for satellite 410a may not have been acquired yet. However, because the almanac correction term $e(410a,t_1) \approx e(410a,t_2)$ may have been computed at the last known position $p$ , at time instant $t_2$ an estimated transposed satellite position 426 may be predicted based on the almanac satellite position 424 at time $t_2$, by the following relationship:

$$\hat{p}_T(410a,t_2) = P(410a,t_2) + \bar{e}(410a,t_1)$$

$$e(410a,t_1) \approx e(410a,t_2)$$

where $\bar{e}(410a,t_1)$ may denote a vector in an appropriate direction of length $e(410a,t_1)$.

More specifically, for example where the satellite receiver 402 may remain stationary at position $p$, the predicted receiver clock corrected range for time instant $t_2$ may be $\hat{\rho}'(410a,t_2) = r_A(410a,t_2) + e(410a,t_2)$, as illustrated in FIG. 4. Any difference from the measured receiver clock corrected pseudorange $|\rho'(410,t_2) - \hat{\rho}'(410,t_2)|$, which may be based on the actual satellite position 418, may then be attributed to a movement by the satellite receiver 402. Linking the predicted transposed position 426 to a known almanac position 424 may allow the almanac to provide a relatively accurate model of the change in range $\Delta_e(410a,t_2 - t_1)$ between the satellite receiver 402 and the position of the satellite 410a at different times, since the satellite 410a position changes little with respect to the satellite almanac position. For example, in FIG. 4, the change in range between the satellite receiver 402 and the satellite almanac position between time $t_1$ and time $t_2$ may be illustrated by $\Delta_e(410a,t_2 - t_1)$ at the almanac satellite position 414, and again at time instant $t_2$ at the actual satellite position 418. Because FIG. 4 may not be to scale, the distance $\Delta(410a,t_2)$ between the actual satellite position 418 and the almanac satellite position 424 at time $t_2$ may not be the same as at time $t_1$.

In summary, the set of equations to determine a position based on the approach discussed above may be as given in the following relationship, in instances where a position $p(t_1)$ may have been acquired from satellites with ephemeris at least once:

$$\begin{aligned} \rho_c(k,t) - b &= \| p(k,t) - p(t) \| \quad k = \{1,...,M\} \\ \rho'(l,t) - e(l,t) &= \| P(l,t) - p(t) \| \quad l = \{M+1,...N\} \end{aligned} \qquad (2)$$

Where $N$ satellites may be received and for $M$ of them, the ephemeris data may be available. $M$ may be assumed to be smaller than 4, since for $M \geq 4$ the normal position determination as described for FIG. 2 and FIG. 3 may be used. Since this approach may be used for $M \leq 3$, b may be assumed constant since it may not be determined for $M < 4$ . Hence, with $b$ assumed constant over a certain period, $e(k,t)$, and $P(k,t)$ known, the position $p(t)$ may be determined in three dimensions from $N = 3$ satellites, with or without ephemeris according to the above relationship. In some instances, it may also be possible to update $b$ based on the following relationships from equation (2), for $N \geq 4$.

$$\begin{aligned} \rho_c(k,t) - b &= \| p(k,t) - p(t) \| \quad k = \{1,...,M\} \\ \rho(l,t) - b &= \| P(l,t) - p(t) \| + e(l,t) \quad l = \{M+1,...N\} \end{aligned}$$

In accordance with various embodiments of the invention, it may be desirable to determine the receiver position by Linearization. Using the Linearization approach, a system of linear equations may be solved in accordance with the following relationship: $\mathbf{p} = \mathbf{Hx}$, similar to the description for FIG. 3A. In some instances, of $N$ received satellites, for $M < N$, the ephemeris may be available at the satellite receiver. In these instances, for $N - M$ satellites, $\hat{\rho}(i,t_2)$ may not be computed based on ephemeris. In these instances, an estimated pseudorange based on almanac information, $\hat{\rho}_a(i,t_2)$, may be estimated. The estimated pseudorange based on almanac information may be related to the estimated pseudorange by the following relationship:

$$\hat{\rho}_a(i,t_2) + d\hat{\rho}_a(i,t_2) \approx \hat{\rho}(i,t_2) \quad (3)$$

where $d\hat{\rho}_a(i,t_2)$ may be the difference term between the estimated pseudorange based on almanac information and the estimated pseudorange based on ephemeris data. By substituting equation (3) into equation (1), the difference term may be described by the following relationship:

$$d\hat{\rho}_a(i,t_2) = \rho(i,t) - \hat{\rho}_a(i,t_2) - \mathbf{H}_i \mathbf{x}$$

where $\mathbf{H}_i$ may be the $i$-th row of matrix $\mathbf{H}$. Hence, in accordance with various embodiments of the invention, $d\hat{\rho}_a(i,t_2)$ may be obtained when $\mathbf{x}$ may be available. By using Doppler measurements, the change in $d\hat{\rho}_a(i,t_2)$ may be estimated, and may provide $d'\hat{\rho}_a(i,t_2)$, the first derivative of $d\hat{\rho}_a(i,t_2)$. Therefore, after an initial $d\hat{\rho}_a(i,t_2)$ may have been estimated, $d'\hat{\rho}_a(i,t_2)$ may be used to extrapolate future changes for some time, without the use of ephemeris data. For example, the following pseudorange estimate may be generated based on the above quantities:

$$\hat{\rho}(i,t_3) = \hat{\rho}_a(i,t_2) + d\hat{\rho}_a(i,t_2) + d'\hat{\rho}_a(i,t_2)dt(t_2,t_3) \quad (4)$$

where $dt(t_2,t_3) = |t_2 - t_3|$ may be the time since the last estimate of $\rho_a(i,t_2)$ and $d\hat{\rho}_a(i,t_2)$. Therefore, by substituting equation (4) into equation (1), an updated position of the receiver may be determined by solving the system of linear equations for x.

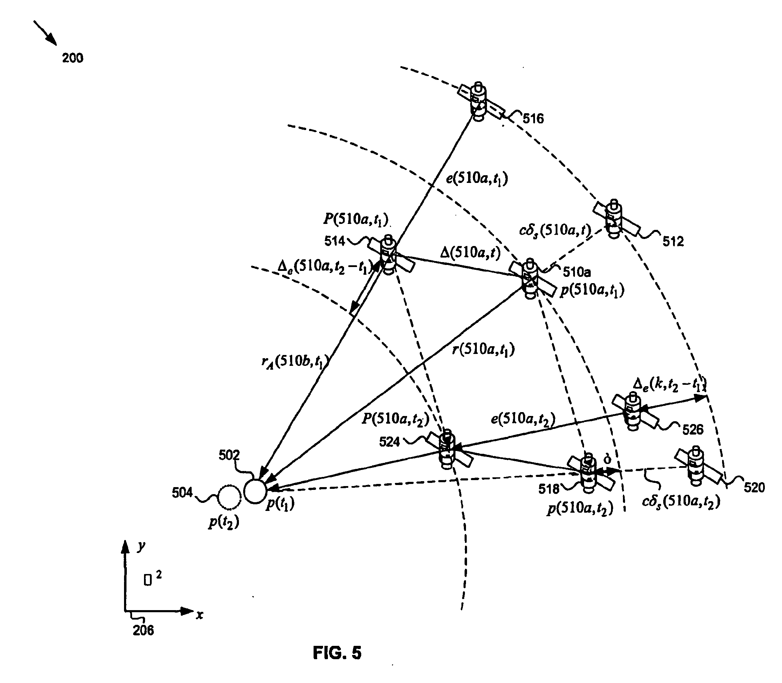

FIG. 5 is a diagram illustrating a prediction error, in accordance with an embodiment of the invention. The elements in FIG. 5 may correspond to the elements listed in FIG. 4. In particular, elements 510a may correspond to element 410a in FIG. 4, and similarly for the other elements depicted. There is shown an additional possible predicted satellite receiver position 504 at time instant $t_2$.

In FIG. 5, a scenario is depicted that may be used to illustrate possible prediction errors. In FIG. 5, the distance vector $\Delta(510a,t_1)$ between the almanac satellite position 514 and the actual satellite position 510a may remain constant at time $t_2$, so that the distance between the almanac satellite position 524 and the actual satellite position $\Delta(510a,t_2) = \Delta(510a,t_1)$. In this situation, given the exemplary geometry (not to scale), the difference in range between the satellite receiver position 502 and the satellite 510a at time $t_1$ and the satellite position 518 at time $t_2$ may be $\delta \equiv |r(510a,t_2) - r(510a,t_1)|$, rather than $\Delta_e(510a,t_2 - t_1)$ as predicted from the change in the almanac satellite position. This case may arise, for example, when the time difference between $t_1$ and $t_2$ may be significant. In such instances, the difference between $\Delta_e(510a,t_2 - t_1)$ and $\delta$ may result in an positional error that may be seen between the transposed satellite position 526 and the measured satellite position 520. In the exemplary situation in FIG. 5, the measured receiver clock corrected pseudorange $\rho'(510a,t_2)$ at time $t_2$ may be equivalent to the range from the measured satellite position 520 to the $p(t_1)$ (assuming the satellite receiver 502 may remain stationary). However, since the satellite receiver 502 may mistakenly think that the measured pseudorange $\rho'(510a,t_2)$ ought to correspond to a distance measured from the transposed satellite position 526, the satellite receiver 502 may believe itself may have changed location and may place itself, for example, in the predicted position 504.

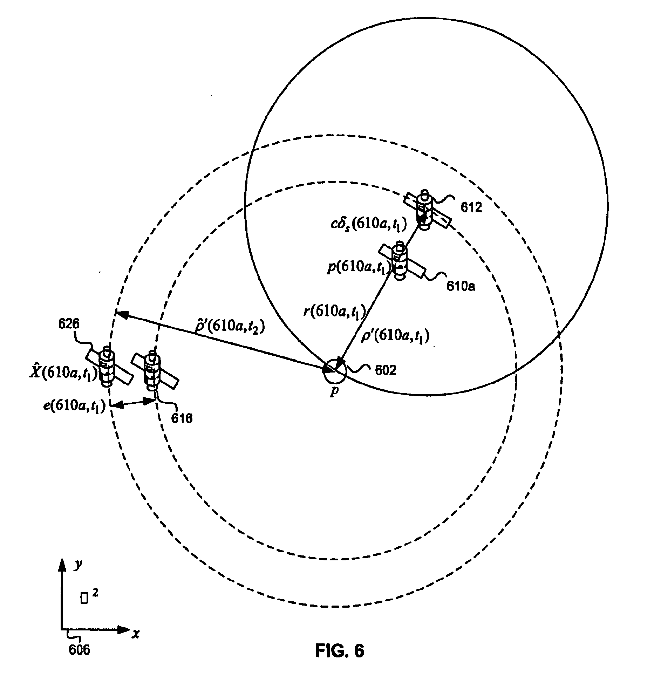

FIG. 6 is a diagram illustrating temporary ephemeris without the use of an almanac position, in accordance with an embodiment of the invention. Referring to FIG. 6, there is shown a coordinate system 606, satellite receiver 602 at position $p$, a satellite 610a at position $p(610a, t_1)$, a measured satellite position 612 at time $t_1$, a translated satellite position 616 at time $t_1$, and a predicted translated satellite position 626 at time $t_2$. There is also shown a measured receiver clock corrected pseudorange $\rho'(610a,t_1)$ between the satellite receiver position 602 and the measured satellite position 612 comprising a range $r(610a,t_1)$ between the actual satellite position 610a and the satellite receiver position 602, and an offset $c\delta_s(610a,t_1)$ between the actual satellite position 610a and the measured satellite position 612. There is also shown a predicted receiver clock corrected pseudorange $\hat{\rho}'(610a,t_2)$.

In the exemplary scenario illustrated in FIG. 6, the position $p$ may be known at time instant $t_1$ from a plurality of satellites with known ephemeris (not illustrated). As described for FIG. 4, the receiver clock corrected pseudorange $\rho'(610a,t_1)$ may be measured and a measured satellite position 612 may be accordingly derived. As described for FIG. 3B and FIG. 4, a translated satellite position 616 may be defined on the circle/sphere defined by the measured satellite position 612. In the depicted example, the translated satellite position 616 may be arbitrarily chosen, for example $p_T(610a,t_1)$.

In order to predict the predicted receiver clock corrected pseudorange $p'(610a,t_2)$ at time instant $t_2$, a rate of

change of the measured receiver clock corrected pseudorange $\rho'(610a,t_1)$ may be determined. This information may be available in the scenario described in FIG. 4 because the satellite almanac position may be known in advance and hence a change in range may be computed from the change in almanac position, for example. In the scenario depicted in FIG. 6, there may be several means of obtaining a rate of change in the receiver clock corrected pseudorange. In accordance with one embodiment of the invention, the Doppler frequency of the received signal may be measured at the satellite receiver 602. The Doppler frequency may be a frequency shift in the frequency of the received signal that may be induced when the satellite moves towards or away from the satellite receiver 602. GPS signals may be transmitted at 1575.42 MHz. Proportional to the velocity at which the satellite receiver 602 and the satellite 610a may move toward or away from each other, the received signal frequency may be shifted by approximately +/- 5 kHz. Hence, based on the Doppler shift in the frequency of the received signal at the satellite receiver 602, the satellite receiver 602 may estimate how fast the satellite moves towards or away from it. This estimated rate of change may hence be used to predict the predicted measured receiver clock corrected pseudorange according to the following relationship:

$$\hat{\rho}'(610a,t_2) = \rho'(610a,t_1) + \left(\frac{d\rho'}{dt}\right)_D (t_2 - t_1)$$

where $\left(\dfrac{d\rho'}{dt}\right)_D$ may denote the estimated rate of change in $\rho'(610a,t_1)$ based on measured Doppler shift.

In accordance with another embodiment of the invention, the rate of change of the measured receiver clock corrected pseudorange $\rho'(610a,t_1)$ may be estimated by collecting pseudoranges over a period of time. A polynomial may then be fit to the collected data and the first derivative of the polynomial fit at the desired time instant, for example $t_2$, may provide an estimate of the rate of change, for example $\left(\dfrac{d\rho'}{dt}\right)_P$ may denote the estimated rate of change based on a series of measured receiver clock corrected pseudorange measurements. For example, in the simplest case, a straight line may be fit to the measurements $\rho'(610a,t_0)$ and $\rho'(610a,t_1)$. Correspondingly, the gradient of the straight line connecting the two measurements may be used to predict $\hat{\rho}'(610a,t_2)$. Similarly, using at least 3 measurement points, a second order polynomial fit may be generated. The invention may not be limited to any particular method of generating the required rate of change, or any particular polynomial order. In another embodiment of the invention, a polynomial may be fit to a series of Doppler frequency measurements, which may also be used to predict the rate of change for a future time instant, as described above.

The set of equations to determine a position based on the approach discussed may be as given in the following relationship, in instances where a position $p(t_1)$ may have been acquired from satellites with ephemeris at least once:

$$\rho_c(k,t) - b = \| p(k,t) - p(t) \| \quad k = 1,...,M$$

$$\rho'(l,t) = \| \hat{p}_T(l,t) - p(t) \| \quad l = M+1,...,N$$

where, $\hat{p}_T(l,t)$ may an arbitrary predicted translated satellite position, for example predicted translated satellite position 626, $N$ satellites may be received and for $M$ of them, the ephemeris data may be available. Note that $M$ may be assumed smaller than 4, since for $M \geq 4$ the normal position determination as described in FIG. 2 and FIG. 3 may be used. Since this approach may be used for $M \leq 3$, $b$ may be assumed constant. Hence, with $b$ assumed constant over a certain, the position $p(t)$ may be determined in three dimensions from $N = 3$ satellites, with or without ephemeris according to the above relationship. In some instances, it may also be possible to update $b$, similarly to the procedure described for FIG. 5.

As described for FIG. 3, in a GPS system, the spreading codes that may be used to determine the range through correlation with a local replica of the correlation code, are termed C/A codes. The C/A codes may be unique to each satellite, and may hence identify a received signal. A C/A code may comprise 1023 chips and may take 1 ms to send. For each bit, 20 repetitions of the C/A code may be transmitted by the satellite, for example satellite 610a, over the duration of 20 ms. In addition, the 30 bits may make one word, 10 words may make a subframe (6 s), 5 subframes may make one page, and 25 pages may make a superframe (12.5 min). In most instances, it may take at least three subframes of a transmission to generate a position. In those instances, at least 18 seconds of data may need to be received.

With regards to pseudorange measurements, the smallest unit useable may be 1 ms, or one C/A code. The satellite receiver 602 may correlate the received signal with a local copy of the C/A code. Hence, the satellite receiver may first detect any offset that may occur modulo 1 ms, as it may acquire C/A code synchronization. For example, if a travel time from a satellite 610a to a satellite receiver 602 may take 78.2 ms, and assuming for illustrative purposes that the signal was sent at t = 0 ms, the receiver may initially be able to determine the modulo-1ms offset. In this instance, the satellite receiver may determine that satellite travel time may be offset by $x_{C/A}$ = 78.2(mod 1$ms$) = 0.2. After at least 20 ms and twenty C/A codes, the satellite receiver 602 may acquire bit-level synchronization and may be able to determine the start of each bit. At this point, the satellite receiver 602 may be able to determine an offset $x_b$ = 78.2(mod 20$ms$) = 18.2. At this point, the satellite receiver 602 may already know that the satellite timing offset may be 78.2ms or more (98.2ms, 110.2 ms, ...), since the satellite's altitude may be known by the receiver to be more than 20,000 km. In instances when the satellite may have acquired word-level synchronization after at least 600ms, the satellite may then achieve precise timing (modulo 600 ms). In the above discussion, it may have been assumed that the satellite may have very little information. However, in practice, the satellite receiver 602 may possess quite accurate information about the satellite 610a position because of the almanac data. Since the signal may travel 300 km in 1 ms, and the almanac may provide a satellite position estimate that may be within 300 km from the actual satellite position 610a, the satellite receiver 602 may be able to determine the precise timing offset already from the first, modulo 1 ms, measurement.

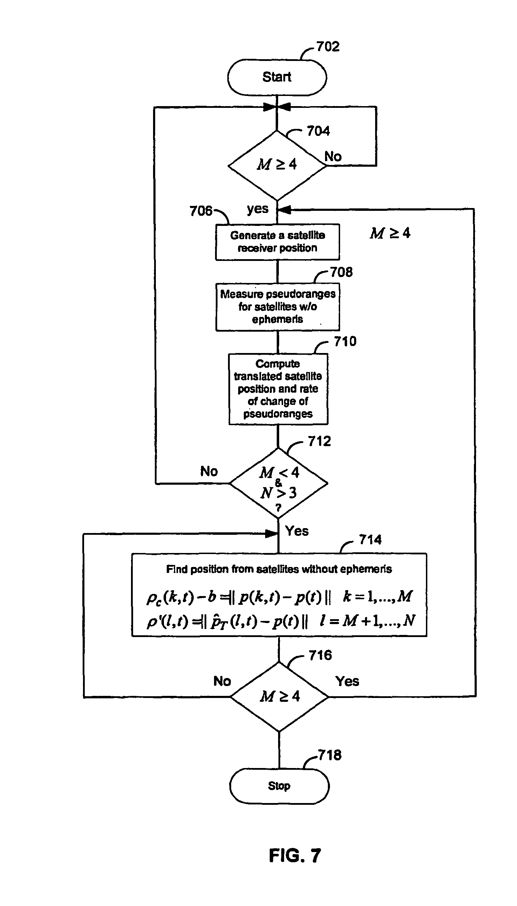

FIG. 7 is a flowchart illustrating an exemplary algorithm to compute a satellite receiver position in accordance with an embodiment of the invention. After initializing the algorithm in step 702, the satellite may need to decide in step 704 whether $M \geq 4$ satellites with ephemeris may be available. If not, an initial position may not be obtained and hence the satellite receiver, for example satellite receiver 602, may have to wait until $M \geq 4$ satellites with ephemeris may be available. In instances where more than 4 satellites with ephemeris may be available, the satellite receiver may generate its position by the procedures described in FIG. 2 and FIG. 3, for example, in step 706. In addition, if other satellites may be visible for which ephemeris may not be available, the satellite receiver 602 may measure pseudoranges to those satellites in step 708. For satellites without ephemeris, in step 710 the satellite may compute a receiver clock corrected pseudorange. Using the receiver clock corrected pseudorange, known satellite receiver position, for example satellite receiver position 602, the satellite receiver may generate a translated satellite position, for example. In some instances, the translated satellite position may be generated based on an almanac satellite position. The satellite receiver may also generate a rate of change for the pseudorange, which may be used to generate a predicted translated satellite position. In some instances, the rate of change of the pseudorange may be estimated from measurements, or from almanac data, as described for FIG. 4 and FIG. 6. In step 712, if there are $M \geq 4$ or more satellites with ephemeris, the satellite receiver may start over and return to step 704. If, in step 712, there may be less than $M < 4$ satellites available with ephemeris and more than $N > 3$ satellites may be visible in total, the satellite position may be computed as described in FIG. 4 to FIG. 6 in step 714. In step 716, if 4 or more satellites with ephemeris may be available, the satellite receiver may return to step 706. If less than 4 satellites with ephemeris may be available, the satellite receiver may remain in step 714 and continue to compute its position according to step 714. In accordance with various embodiments of the invention, temporary ephemeris may comprise a translated satellite position and a rate of change of any associated receiver clock corrected pseudorange.

In accordance with an embodiment of the invention, a method and system for generating temporary ephemeris may comprise determining one or more positions of a satellite receiver, for example satellite receiver 202, based on a plurality of satellite signals received from a plurality of satellites for which complete ephemeris data has been received at the satellite receiver, as described for FIG. 2 and FIG. 3. Temporary ephemeris data may be generated from the determined one or more positions p(.) of the satellite receiver and one or more satellite signals from one or more satellites with incomplete ephemeris data. One or more estimated positions of the satellite receiver may be determined based on the generated temporary ephemeris and a second plurality of satellite signals, wherein at least one of the second plurality of satellite signals is associated with the one or more satellites with incomplete ephemeris data, as described for FIG. 3B, FIG. 4, FIG. 5, FIG. 6 and FIG. 7.

The temporary ephemeris data may be generated by generating a translated satellite position, for example a translated satellite position 416, and a rate of change, for example $\Delta_e$, of an associated receiver clock corrected pseudorange, for example p'(.). The translated satellite position may be generated based on an almanac satellite position, for example P(.) , or at a position determined by said receiver clock corrected pseudorange and/or said associated rate of change of said receiver clock corrected pseudorange. The rate of change of said associated receiver clock corrected pseudorange may be generated based on one or more Doppler frequency measurement of said plurality of satellite signals and/or said second plurality of satellite signals, or based on a plurality of pseudorange measurements, as described, for example in FIG. 6. The receiver clock corrected pseudorange may be determined from at least a receiver clock offset and a pseudorange measurement. When the satellite receiver may receive complete ephemeris data from the one or more satellites from which the incomplete ephemeris data was received by the satellite receiver, utilizing this complete ephemeris data and the determined one or more positions to determine a location of the satellite receiver, as described in FIG. 2 and FIG. 3. The estimated position of the satellite receiver may be update based on newly generated temporary ephemeris until the satellite receiver receives complete ephemeris data from the one or more satellites for which the incomplete ephemeris data was received by the satellite receiver. The generated temporary ephemeris data may be updated based on a rate of change of an associated receiver clock corrected pseudorange and a translated satellite position. The plurality of satellites, a second plurality of satellites from which the second plurality of satellite signals are received, and the satellite receiver may conform to the Global Positioning System (GPS) standard, the GALILEO standard, the GLOSNASS standard, the IRNSS standard, or the BEIDOU standard.

Another embodiment of the invention may provide a machine-readable storage, having stored thereon, a computer program having at least one code section executable by a machine, thereby causing the machine to perform the steps as described above for a method and system for generating temporary ephemeris.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

It is intended that the present invention not be limited to the particular embodiment disclosed, but that the present invention will include all embodiments falling within the scope of the appended claims.

## Claims

1. A method for processing satellite signals, the method comprising:

    determining (706) one or more positions of a satellite receiver based on a plurality of satellite signals received from a plurality of satellites for which complete ephemeris data has been received at said satellite receiver;
    generating temporary ephemeris data from said determined one or more positions of said satellite receiver and one or more satellite signals from one or more satellites with incomplete ephemeris data;
    determining one or more estimated positions of said satellite receiver based on said generated temporary ephemeris and a second plurality of satellite signals, wherein at least one of said second plurality of satellite signals is associated with said one or more satellites with incomplete ephemeris data; and
    generating said temporary ephemeris data by generating (710) a translated satellite position and a rate of change of an associated receiver clock corrected pseudorange;
    wherein said translated satellite position is generated based on an almanac satellite position.

2. The method according to claim 1, comprising generating said translated satellite position at a position determined by said receiver clock corrected pseudorange and/or said associated rate of change of said receiver clock corrected pseudorange.

3. The method according to claim 1, comprising generating said rate of change of said associated receiver clock corrected pseudorange based on one or more Doppler frequency measurement of said plurality of satellite signals and/or said second plurality of satellite signals.

4. The method according to claim 1, comprising generating said rate of change of said associated receiver clock corrected pseudorange based on a plurality of pseudorange measurements.

5. A system for processing satellite signals, the system comprising:

    one or more circuits, said one or more circuits enable:

determination of one or more positions of a satellite receiver based on a plurality of satellite signals received from a plurality of satellites for which complete ephemeris data has been received at said satellite receiver; generation of temporary ephemeris data from said determined one or more positions of said satellite receiver and one or more satellite signals from one or more satellites with incomplete ephemeris data; and determination of one or more estimated positions of said satellite receiver based on said generated temporary ephemeris and a second plurality of satellite signals, wherein at least one of said second plurality of satellite signals is associated with said one or more satellites with incomplete ephemeris data; wherein said one or more circuits generate said temporary ephemeris data by generating a translated satellite position and a rate of change of an associated receiver clock corrected pseudorange, wherein said one or more circuits generate said translated satellite position based on an almanac satellite position.

6. The system according to claim 5, wherein said one or more circuits generate said translated satellite position at a position determined by said receiver clock corrected pseudorange and/or said associated rate of change of said receiver clock corrected pseudorange.

**Patentansprüche**

1. Verfahren zum Verarbeiten von Satellitensignalen, wobei das Verfahren umfasst:

Ermitteln (706) einer oder mehrerer Positionen eines Satellitenempfängers basierend auf einer Vielzahl von Satellitensignalen, die von einer Vielzahl von Satelliten empfangen werden, für die vollständige Ephemeridendaten an dem Satellitenempfänger empfangen worden sind;
Erzeugen von temporären Ephemeridendaten aus der ermittelten einen oder den ermittelten mehreren Positionen des Satellitenempfängers und einem oder mehreren Satellitensignalen von einem oder mehreren Satelliten mit unvollständigen Ephemeridendaten;
Ermitteln einer oder mehrerer geschätzter Positionen des Satellitenempfängers basierend auf den erzeugten temporären Ephemeridendaten und einer zweiten Vielzahl von Satellitensignalen, wobei wenigstens eines der zweiten Vielzahl von Satellitensignalen mit dem einen oder den mehreren Satelliten mit unvollständigen Ephemeridendaten assoziiert ist; und
Erzeugen der temporären Ephemeridendaten durch Erzeugen (710) einer übertragenen Satellitenposition und einer Änderungsrate eines assoziierten empfängertaktkorrigierten Pseudobereichs;
wobei die übertragene Satellitenposition basierend auf einer Almanach-Satellitenposition erzeugt wird.

2. Verfahren nach Anspruch 1, das das Erzeugen der übertragenen Satellitenposition an einer Position umfasst, die von dem empfängertaktkorrigierten Pseudobereich und/oder der assoziierten Änderungsrate des empfängertaktkorrigierten Pseudobereichs ermittelt wird.

3. Verfahren nach Anspruch 1, das das Erzeugen der Änderungsrate des assozüerten empfängertaktkorrigierten Pseudobereichs basierend auf einer oder mehreren Dopplerfrequenzmessungen der Vielzahl von Satellitensignalen und/oder der zweiten Vielzahl von Satellitensignalen umfasst.

4. Verfahren nach Anspruch 1, das das Erzeugen der Änderungsrate des assoziierten empfängertaktkorrigierten Pseudobereichs basierend auf einer Vielzahl von Pseudobereichsmessungen umfasst.

5. System zum Verarbeiten von Satellitensignalen, mit:

einer oder mehreren Schaltungen, wobei die eine oder die mehreren Schaltungen Folgendes ermöglichen:

Ermitteln einer oder mehrerer Position eines Satellitenempfängers basierend auf einer Vielzahl von Satellitensignalen, die von einer Vielzahl von Satelliten empfangen werden, für die vollständige Ephemeridendaten an dem Satellitenempfänger empfangen worden sind;
Erzeugen von temporären Ephemeridendaten aus der ermittelten einen oder den ermittelten mehreren Positionen des Satellitenempfängers und einem oder mehreren Satellitensignalen von einem oder mehreren Satelliten mit unvollständigen Ephemeridendaten;
Ermitteln einer oder mehrerer geschätzter Positionen des Satellitenempfängers basierend auf den erzeugten temporären Ephemeridendaten und einer zweiten Vielzahl von Satellitensignalen, wobei wenigstens eines der zweiten Vielzahl von Satellitensignalen mit dem einen oder den mehreren Satelliten mit unvollständigen Ephemeridendaten assoziiert ist; und

wobei die eine oder die mehreren Schaltungen die temporären Ephemeridendaten durch Erzeugen einer übertragenen Satellitenposition und einer Änderungsrate eines assoziierten empfängertaktkorrigierten Pseudobereichs erzeugen,
wobei die eine oder die mehreren Schaltungen die übertragene Satellitenposition basierend auf einer Almanach-Satellitenposition erzeugen.

**6.** System nach Anspruch 5, wobei die eine oder die mehreren Schaltungen die übertragene Satellitenposition an einer Position erzeugen, die von dem empfängertaktkorrigierten Pseudobereich und/oder der assoziierten Änderungsrate des empfängertaktkorrigierten Pseudobereichs ermittelt wird.

**Revendications**

**1.** Procédé de traitement de signaux de satellites, le procédé comprenant :

la détermination (706) d'une ou plusieurs positions d'un récepteur de satellites sur la base d'une pluralité de signaux de satellites reçus d'une pluralité de satellites pour lesquels des données d'éphéméride complètes ont été reçues au niveau dudit récepteur de satellites ;
la génération de données d'éphéméride temporaires à partir de ladite une ou desdites plusieurs positions déterminées dudit récepteur de satellites et d'un ou plusieurs signaux de satellites d'un ou plusieurs satellites avec des données d'éphéméride incomplètes ;
la détermination d'une ou plusieurs positions estimées dudit récepteur de satellites sur la base dudit éphéméride temporaire généré et d'une deuxième pluralité de signaux de satellites, dans lequel au moins un de ladite deuxième pluralité de signaux de satellites est associé avec ledit un ou lesdits plusieurs satellites avec des données d'éphéméride incomplètes ; et
la génération desdites données d'éphéméride temporaires en générant (710) une position de satellite translatée et une vitesse de changement d'une pseudodistance corrigée associée d'horloge de récepteur ;
dans lequel ladite position de satellite translatée est générée sur la base d'une position d'almanach de satellites.

**2.** Procédé selon la revendication 1, comprenant la génération de ladite position de satellite translatée en une position déterminée par ladite pseudodistance corrigée d'horloge de récepteur et/ou ladite vitesse de changement associée de ladite pseudodistance corrigée d'horloge de récepteur.

**3.** Procédé selon la revendication 1, comprenant la génération de ladite vitesse de changement de ladite pseudodistance corrigée associée d'horloge de récepteur sur la base d'une ou plusieurs mesures de fréquences Doppler de ladite pluralité de signaux de satellites et/ou de ladite deuxième pluralité de signaux de satellites.

**4.** Procédé selon la revendication 1, comprenant la génération de ladite vitesse de changement de ladite pseudodistance corrigée associée d'horloge de récepteur sur la base d'une pluralité de mesures de pseudodistances.

**5.** Système de traitement de signaux de satellites, le système comprenant :

un ou plusieurs circuits, ledit un ou lesdits plusieurs circuits permettent :

la détermination d'une ou plusieurs positions d'un récepteur de satellites sur la base d'une pluralité de signaux de satellites reçus d'une pluralité de satellites pour lesquels des données d'éphéméride complètes ont été reçues au niveau dudit récepteur de satellites ;
la génération de données d'éphéméride temporaires à partir de ladite une ou desdites plusieurs positions déterminées dudit récepteur de satellites et d'un ou plusieurs signaux de satellites d'un ou plusieurs satellites avec des données d'éphéméride incomplètes ; et
la détermination d'une ou plusieurs positions estimées dudit récepteur de satellites sur la base dudit éphéméride temporaire généré et d'une deuxième pluralité de signaux de satellites, dans lequel au moins un de ladite deuxième pluralité de signaux de satellites est associé avec ledit un ou lesdits plusieurs satellites avec des données d'éphéméride incomplètes ;

dans lequel ledit un ou lesdits plusieurs circuits génèrent lesdites données d'éphéméride temporaires en générant une position de satellite translatée et une vitesse de changement d'une pseudodistance corrigée associée d'horloge de récepteur,
dans lequel ledit un ou lesdits plusieurs circuits génèrent ladite position de satellite translatée sur la base d'une position d'almanach de satellites.

6. Système selon la revendication 5, dans lequel ledit un ou lesdits plusieurs circuits génèrent ladite position de satellite translatée en une position déterminée par ladite pseudodistance corrigée d'horloge de récepteur et/ou ladite vitesse de changement associée de ladite pseudodistance corrigée d'horloge de récepteur.

**FIG. 1**

**FIG. 2**

FIG. 3

EP 2 101 186 B1

**FIG. 3B**

**FIG. 4**

EP 2 101 186 B1

FIG. 5

FIG. 6

702

**Start**

704

$M \geq 4$    No

706   yes

Generate a satellite
receiver position

$M \geq 4$

708

Measure pseudoranges
for satellites w/o
ephemeris

710

Compute
translated satellite
position and rate
of change of
pseudoranges

712

No

$M < 4$
&
$N > 3$
?

Yes

714

Find position from satellites without ephemeris

$$\rho_c(k,t) - b = \| p(k,t) - p(t) \| \quad k = 1,...,M$$

$$\rho'(l,t) = \| \hat{p}_T(l,t) - p(t) \| \quad l = M+1,...,N$$

716

No         Yes

$M \geq 4$

718

**Stop**

**FIG. 7**

**EP 2 101 186 B1**

**REFERENCES CITED IN THE DESCRIPTION**

**Patent documents cited in the description**

- WO 2007092523 A